# EUROPEAN PATENT APPLICATION

(11) **EP 1 627 999 A2**
(43) Date of publication of application: **22.02.2006**
(21) Application number: 05016993.7
(22) Date of filing: 04.08.2005
(51) Int. Cl.: F01N 3/30, F01N 3/34, F02B 75/22, F02B 61/02

(54) **Engine with secondary air supply**

(30) Priority: 17.08.2004 JP 2004237338
(71) Applicant: YAMAHA HATSUDOKI KABUSHIKI KAISHA, Iwata-shi Shizuoka-ken (JP)
(72) Inventor: Nakayama, Yoshiharu, Iwata-shi Shizuoka-ken (JP)
(74) Representative: Grünecker, Kinkeldey, Stockmair & Schwanhäusser Anwaltssozietät

(57) **Abstract**

The present invention relates to an engine, in particular for motorcycles, having a secondary air supply system, for supplying secondary air to an exhaust system of the engine and having a chain chamber (C) centrally arranged between first and second cylinders (2e,2f) of the engine, said secondary air supply system comprising first-cylinder and second cylinder valve chambers (41,42), wherein at least portions of the valve chambers overlap the chain chamber (C) as seen in a direction along a cylinder axis.

## Description

The present invention relates to an engine, and in particular to an engine having a secondary air supply system for supplying secondary air to an exhaust system.

There are proposed devices for supplying secondary air to an exhaust system to burn HC and CO contained in exhaust gas and thus to purify the exhaust gas. Conventional devices for supplying secondary air to an exhaust system of this type include the one in which a reed valve device is integrally provided on a head cover mounted on a cylinder head (see JP-A-2003-56647).

Meanwhile, in the case of a so-called center-chain-type engine in which a timing chain for rotatively driving a camshaft is disposed between first and second cylinders, the first and second cylinders are spaced apart from each other by the width of a chain chamber. Accordingly, a first-cylinder valve chamber and a second-cylinder valve chamber for each accommodating a reed valve, are also spaced apart from each other. This results in a problem of an increase in the number of parts, such as secondary air introduction hoses connected to the valve chambers, cover members for opening and closing openings of the valve chambers, and bolts for securing the cover members. Also, since there are a number of seal mating faces, the sealing structure may become complex.

In view of the foregoing, an object of the present invention is to provide an engine capable of avoiding an increase in the number of parts and simplifying the sealing structure of the secondary air introduction hoses and the cover members.

This objective is solved in an inventive manner by an engine, in particular for motorcycles, having a secondary air supply system, for supplying secondary air to an exhaust system of the engine and having a chain chamber centrally arranged between first and second cylinders of the engine, said secondary air supply system comprising first-cylinder and second cylinder valve chambers, wherein at least portions of the valve chambers overlap the chain chamber as seen in a direction along a cylinder axis.

Preferably, the engine is provided with a cylinder block, a cylinder head fastened on the cylinder block, and a head cover mounted to an opening of the cylinder head, wherein the chain chamber for accommodating a cam chain for driving a camshaft is formed between the first cylinder and the second cylinder aligned in the direction along the camshaft.

Further, preferably the first-cylinder valve chamber and the second-cylinder valve chamber are each accommodating a reed valve for supplying secondary air to an exhaust system, and are adjacent to each other above the chain chamber.

Still further, preferably the first-cylinder and second-cylinder valve chambers are having a first and a second valve chamber opening, respectively, which allow the respective valve chambers to access outside, wherein a first and a second valve chamber cover for opening and closing the respective valve chamber openings are integrally formed with each other.

According to a preferred embodiment, the first and second valve chambers have a rectangular shape extending longer in the direction along the camshaft, and each reed valve in the first and second valve chambers includes a rectangular, thin plate and is located with its longer sides extending in the direction along the camshaft.

According to another preferred embodiment, the head cover has a breather chamber for separating oil mist from blow-by gas, the breather chamber at least partially overlapping the chain chamber as seen in the direction along the cylinder axis and being adjacent to the first-cylinder and second-cylinder valve chambers, and the breather chamber having a breather chamber opening which allows the breather chamber to access outside.

Therein, it is further preferable if the engine is provided with a breather chamber cover for opening and closing the breather chamber opening wherein the breather chamber cover is integrally formed with the first-cylinder and second-cylinder valve chamber covers.

According to yet another preferred embodiment, the engine is provided with a secondary air hose and a breather hose, which are bundled together, the secondary air hose communicating an air cleaner connected to an intake passage in communication with a combustion chamber and the first-cylinder and second-cylinder valve chambers, and the breather hose communicating the air cleaner and the breather chamber.

In the following, the present invention is explained in greater detail with respect to several embodiments thereof in conjunction with the accompanying drawings, wherein:
- FIG. 1: is a sectional side view of a chain chamber of an engine in accordance with an embodiment;
- FIG. 2: is a partially sectional side view of the engine in FIG. 1;
- FIG. 3: is a plan view of a forward cylinder head of the engine in FIG. 1, showing the state of a head cover being removed;
- FIG. 4: is a plan view of the forward head cover of the engine in FIG. 1, showing the state of valve chamber covers being removed;
- FIG. 5: is a plan view of the forward head cover of the engine in FIG. 1; and

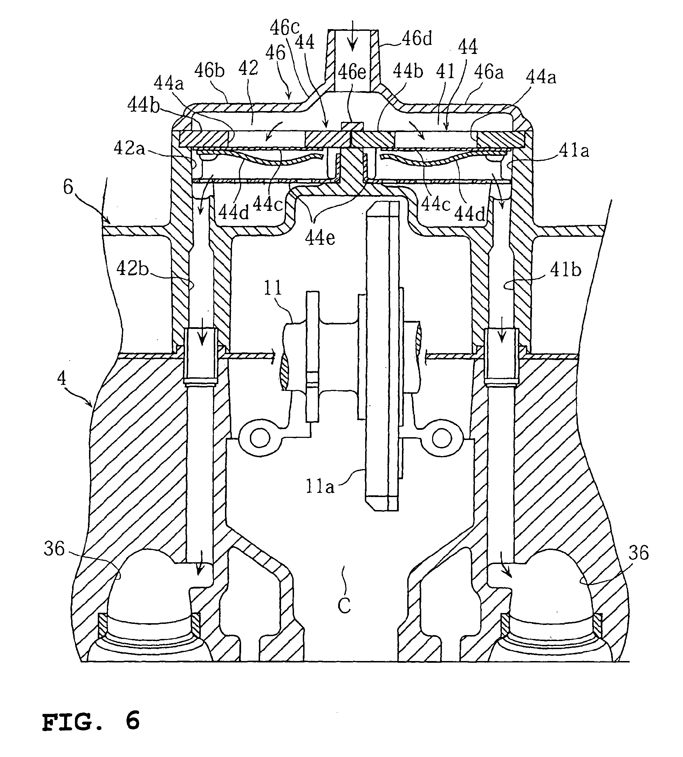

- FIG. 6: is a sectional side view, showing reed valves of the engine in FIG. 1.

An embodiment will be described below with reference to accompanying drawings.

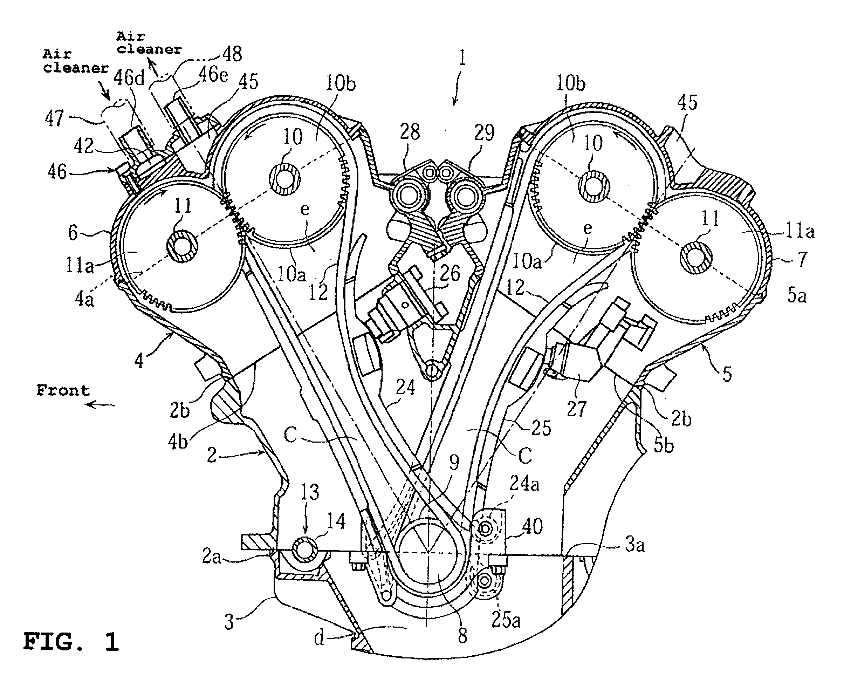

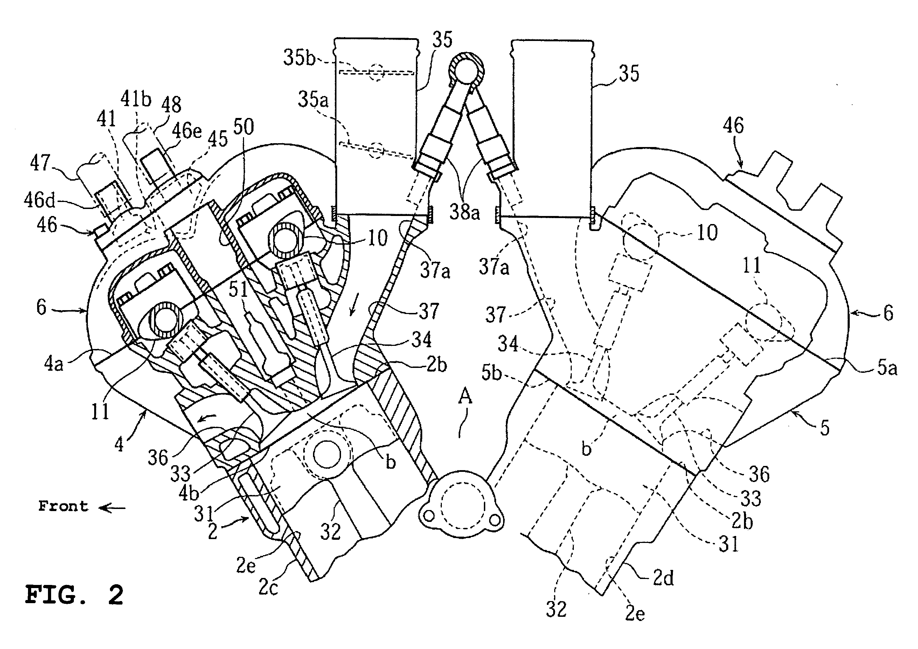

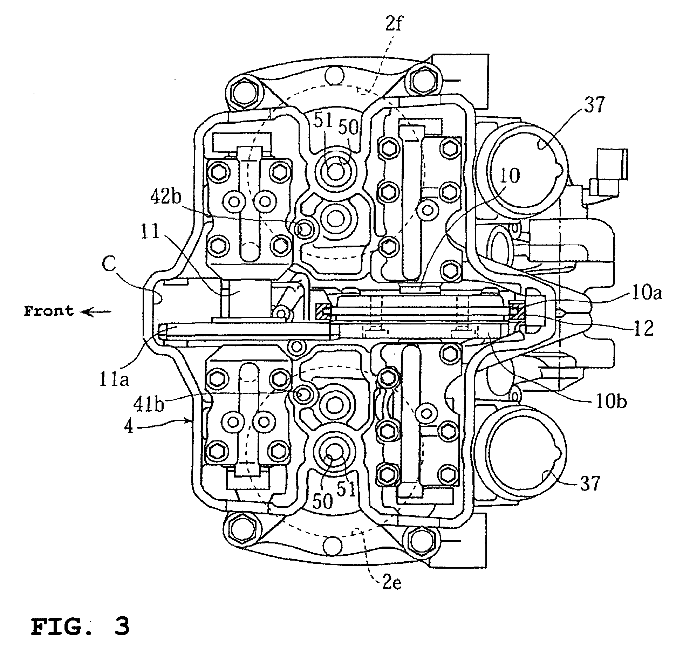

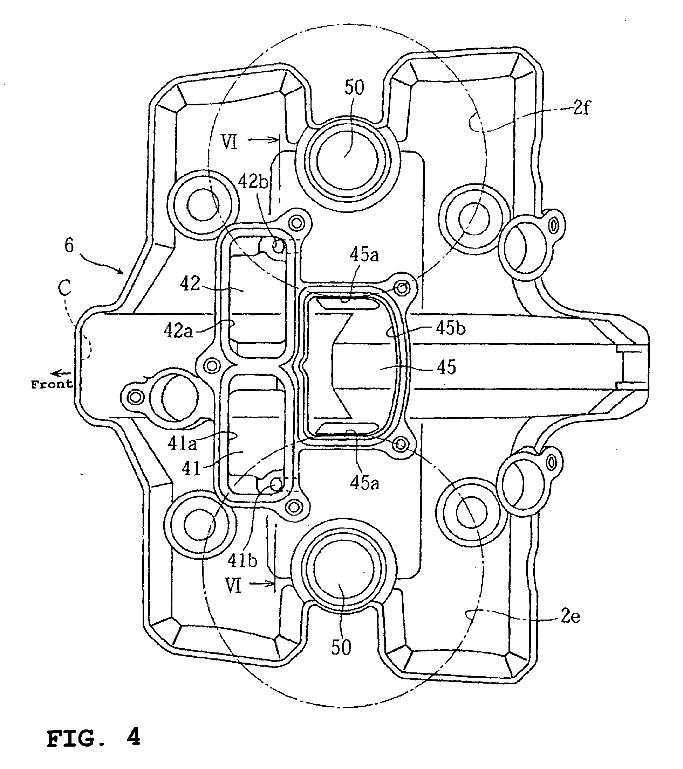

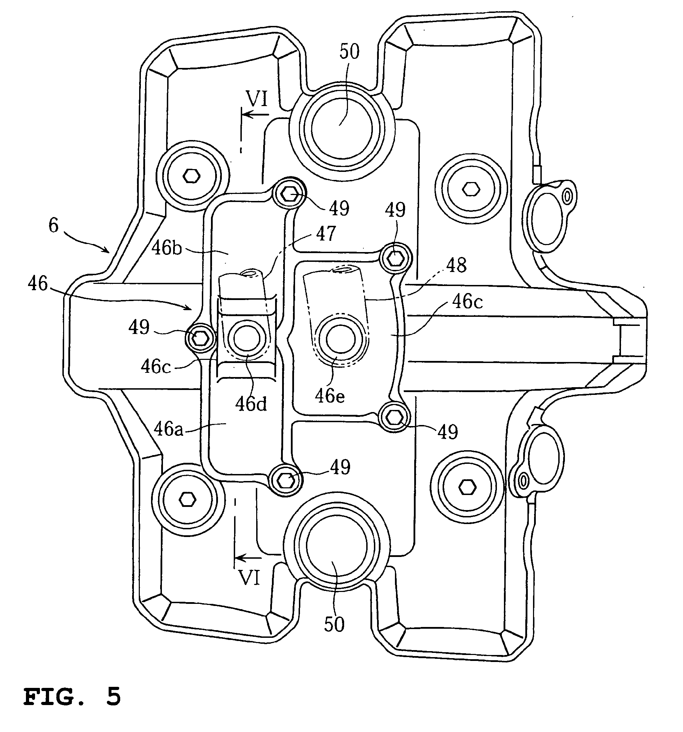

FIGs. 1 through 5 are explanatory views of the engine in accordance with an embodiment. FIG. 1 is a sectional side view of the overall engine. FIG. 2 is a partially sectional side view of cylinder heads and head covers, and the vicinity thereof. FIG. 3 is a plan view of the cylinder head. FIGs. 4 and 5 are plan views of the head cover.

In the drawings, reference numeral 1 denotes a water-cooled, four-stroke, V-type, four-cylinder engine, which has the following constitution. A cylinder block 2 has forward cylinders 2c and rearward cylinders 2d formed to have a V-bank. A crankcase 3 is connected to a lower mating face 2a of the cylinder block 2. Forward and rearward cylinder heads 4, 5 are connected to upper mating faces 2b, 2b of the forward and rearward cylinders 2c, 2d, respectively. Forward and rearward head covers 6, 7 are mounted on the forward and rearward cylinder heads 4, 5, respectively.

The forward and rearward cylinders 2c, 2d each have left and right cylinder bores (first and second cylinders) 2e, 2f formed in alignment with each other in the direction along camshafts. Pistons 31 inserted in the left and right cylinder bores 2e, 2f are connected to a crank pin of a crankshaft 8 through respective connecting rods 32. The crankshaft 8 has left and right journal portions and two other journal portions at its central portion with respect to its axis, which are supported by journal bearings formed between the lower mating face 2a of the cylinder block 2 and an upper mating face 3a of the crankcase 3.

An axially central portion of the crankshaft 8 is integrally formed with crank sprockets 9, 9 for the forward and rearward cylinders. An intake camshaft 10 and an exhaust camshaft 11 are located on each of upper mating faces 4a, 5a of the cylinder heads 4, 5 in parallel with the crankshaft 8 and in a manner such that the intake camshaft 10 is positioned on the V-bank "A" side. An axially central portion of each intake camshaft 10 is formed with a cam sprocket 10a, which is connected to the crank sprocket 9 through a timing chain 12.

There are also provided an intake-side timing gear 10b at the axially central portion of the intake camshaft 10, which is fastened to one side of the cam sprocket 10a with bolts. The intake-side timing gear 10b is engaged with an exhaust-side timing gear 11a disposed on the exhaust camshaft 11. In such a manner, rotation of the crankshaft 8 is transmitted to the intake camshaft 10 via the timing chain 12, and the rotation of the intake camshaft 10 is transmitted to the exhaust camshaft 11 via the timing gears 10b, 11 a.

A chain chamber "c" is formed between the left and right cylinder bores 2e, 2f by the crankcase 3, the cylinder block 2 and the cylinder heads 4, 5 to communicate the crank chamber "d" and the cam chamber "e." The exhaust-side and intake-side timing gears 11a, 10b, cam sprocket 10a, timing chain 12 and crank sprocket 9 are positioned in the chain chamber "c."

Reference numerals 24, 25 denote tensioner members for tension adjustment of the respective timing chains 12, 12. Lower ends 24a, 25a of the tensioner members 24, 25 are swingably supported by a retaining member 40. The retaining member 40 is attached to the lower mating face 2a of the cylinder block 2. Tensioners 26, 27 urge respective upper parts of the tensioner members 24, 25 in the direction of application of tension to the timing chains 12.

Reference numerals 28, 29 denote hydraulic switching valves for switching a valve timing variable mechanism (not shown), which are located within the V-bank "A" with their axes in parallel with the crankshaft.

Lower mating faces 4b, 5b of the cylinder heads 4, 5 are formed with recessed combustion chambers "b," each of which has openings to an exhaust port 36 and an intake port 37. The openings of the exhaust and intake ports 36, 37 on the combustion chamber side are provided with an exhaust valve 33 and an intake valve 34, which are driven to open and close the openings by the exhaust camshaft 11 and the intake camshaft 10, respectively. Reference numeral 51 denotes a spark plug screwed in generally central portions of the cylinder heads 4, 5. An electrode of the spark plug 51 is positioned in a generally central portion of the combustion chamber "b." Reference numeral 50 denotes a plug hole to allow removal of the spark plug 51.

An exhaust system (not shown) is connected to an outside connection opening of the exhaust port 36. The intake port 37 extends generally vertically upward within the V-bank "A," and an outside connection opening 37a of the upper end of the intake port 37 is connected to a throttle body 35. The throttle body 35 includes a downstream-side throttle valve 35a and an upstream-side throttle valve 35b. There is provided a fuel injection valve 38a at the downstream end of the throttle body 35 in a manner such that the fuel injection valve 38a is positioned within the V-bank "A" and fuel is injected to the opening of the intake port 37 on the combustion chamber side.

The engine 1 in accordance with the present embodiment has a secondary air supply system for supplying secondary air downstream from the exhaust valve opening of the exhaust port 36, and a blow-by gas discharge system for separating mixed oil mist from blow-by gas and discharging such gas to an intake system. The blow-by gas is mainly the burned gas which leaked through the gap between a piston ring and the cylinder bore and entered into the crank chamber, in which atomized engine oil is mixed. However, such blow-by gas must not be discharged to the ambient air as it is. Therefore, the blow-by gas, after the oil mist has been separated therefrom and collected, is discharged to the intake system and burned again in the engine.

The secondary air supply system has a left valve chamber (first-cylinder valve chamber) 41 for the left cylinder bore 2e and a right valve chamber (second-cylinder valve chamber) 42 for the right cylinder bore 2f. The left and right valve chambers 41, 42 are recesses of a rectangular shape in plan view formed in top surfaces of the head covers 6, 7. As seen in the direction along cylinder axes, the left and right valve chambers 41, 42 overlap the chain chamber "C," at their portions closer to the axially center portion of the crankshaft, and are adjacent to each other above the chain chamber "C." Also, the left and right valve chambers 41, 42 at their outer portions with respect to the crankshaft overlap the left and right cylinder bores 2e, 2f, respectively (see FIG. 4).

The left and right valve chambers 41, 42 have left and right valve chamber openings (first and second valve chamber openings) 41a, 42a, respectively, which allow the respective valve chambers to access outside. The left and right valve chamber openings 41 a, 42a have a rectangular shape and are each located with its longer sides extending in the direction along the camshafts. The left and right valve chamber openings 41 a, 42a are in contact and integral with each other above the chain chamber "C" through a common partition wall.

There are provided reed valves 44 having the same structure in the left and right valve chambers 41, 42, respectively. The reed valves 44 define the respective valve chambers 41, 42 into lower and upper sections. Each base plate 44b has a rectangular valve opening 44a. The lower surface of the base plate 44b is provided with a valve plate 44c including a rectangular, thin plate, for opening and closing the valve opening 44a. The opening of the valve plate 44c is regulated by a stopper plate 44d. The valve plate 44c is located with its longer sides extending in the direction along the camshafts. An outside end of each valve plate 44c, which is positioned opposite the chain chamber "C," is fastened to the base plate 44b together with the stopper plate 44d with a bolt.

In the bottom surfaces of the left and right valve chambers 41, 42, air introduction passages 41 b, 42b have openings, and run in the cylinder head and lead downstream from the exhaust valve 33 of the exhaust port 36. Reference numeral 44e denotes a shield plate for restricting backflow of exhaust gas to the reed valve 44 side. The shield plate 44e comprises a plate member having a number of small holes formed therein.

The blow-by gas discharge system has a breather chamber 45 for separating oil mist from blow-by gas. The breather chamber 45 is formed in the shape of a recess in the top surfaces of the head covers 6, 7 in a manner such that the breather chamber 45 generally overlaps the chain chamber "C" as seen in the direction along the cylinder axes. The breather chamber 45 has a generally rectangular shape and is located adjacent to the longer sides, closer to the cylinder axes, of the left and right valve chambers 41, 42. The bottom surface of the breather chamber 45 has breather gas introduction openings 45a, 45a formed in communication with the chain chamber "C." Blow-by gas is thereby introduced into the breather chamber 45 through the chain chamber "C" from the crank chamber "d."

The breather chamber 45 has a breather chamber opening 45b which allows the breather chamber 45 to access outside. The breather chamber opening 45b and the left and right valve chamber openings 41 a, 42a are provided with a single removable common cover 46 with bolts 49.

The cover 46 is obtained by integrally forming left and right valve chamber cover portions 46a, 46b having generally the same shape as that of seal faces of the left and right valve chamber openings 41 a, 42a, and a breather chamber cover portion 46c having generally the same shape as that of a seal face of the breather chamber opening 45b. The seal faces of the left and right valve chamber openings and the seal face of the breather chamber opening are formed to be flush with each other.

The boundary area between the left and right valve chamber cover portions 46a, 46b is formed with a raised portion 46c protruding upward for communicating the left and right valve chambers 41, 42. The swell portion 46c is integrally formed with a tubular air inlet 46d. Also, the breather chamber cover portion 46c at its central portion with respect to the camshafts is formed with a tubular air exhaust portion 46e. Reference numeral 46e denotes a rib for depressing the left and right base plates 44b, 44b, which is integrally formed with the cover 46.

The air inlet 46d is connected to the downstream end of an air introduction hose 47 for common use between the left and right valve chambers 41, 42. The upstream end of the air introduction hose 47 is connected to the secondary side of an air cleaner (not shown). The air exhaust portion 46e is connected to the upstream end of an exhaust hose 48, and the downstream end of the exhaust hose 48 is connected to the secondary side of the air cleaner. The exhaust hose 48 and the air introduction hose 47 are routed to run the same path and bundled with each other.

In the present embodiment, the left valve chamber 41 and the right valve chamber 42 overlap the chain chamber "C," at their portions closer to the axially center portion of the crankshaft, and are adjacent to each other above the chain chamber "C." Thus, while the left cylinder bore 2e and the right cylinder bore 2f are located on opposite sides of the chain chamber "C," an increase of the distance between the left and right valve chambers is avoided, so that the left and right valve chambers 41, 42 can adjoin each other. This allows the left and right valve chamber cover portions 46a, 46b to be integrally formed. Therefore, only a single secondary air hose 47 for introducing air to the left and right valve chambers 41, 42 is required, and the number of fastening bolts 49 can be reduced, so that the structure is simplified.

Further, the left and right valve chambers 41, 42 have a rectangular shape extending longer in the direction along the camshafts. The reed valves 44 in the left and right valve chambers 41, 42 have a rectangular shape and are each located with its longer sides extending in the direction along the camshafts. Thus, when the left and right cylinder bores 2e, 2f are located on opposite sides of the chain chamber "C," the left and right valve chambers 41, 42 can be located adjacent to each other without difficulty, and the capacity, area and space for the valve chambers 41, 42 and the reed valves 44 can be obtained.

Further, the breather chamber 45 generally overlaps the chain chamber "C." Thus, when the left and right cylinder bores 2e, 2f are located on opposite sides of the chain chamber "C," the capacity and space for the breather chamber 45 can be obtained without difficulty by effectively using a ceiling wall of the chain chamber "C."

Further, the breather chamber 45 adjoins the left and right valve chambers 41, 42. Thus, the breather chamber cover portion 46c can be integrally formed with the left and right valve chamber cover portions 46a, 46b. Therefore, the mating faces (seal faces) of the openings 41 a, 42a and 45b are flush with each other, in terms of which the number of fastening bolts 49 can be reduced and the structure can be simplified.

Further, the secondary air hose 47 for communicating the air cleaner and the left and right valve chambers 41, 42, and the breather hose 48 for communicating the air cleaner and the breather chamber 45 are bundled together. Thus, the routing structure of the hoses 47, 48 can be simplified, and hence the vicinity of the head covers can be simplified.

The description above discloses (amongst others) a preferred embodiment of an engine having a cylinder block, a cylinder head fastened on the cylinder block, and a head cover mounted to an opening of the cylinder head, in which a chain chamber for accommodating a cam chain for driving a camshaft is formed between a first cylinder and a second cylinder aligned in the direction along the camshaft, in which a first-cylinder valve chamber and a second-cylinder valve chamber for each accommodating a reed valve for supplying secondary air to an exhaust system are formed in a manner such that at least portions of the first-cylinder valve chamber and the second-cylinder valve chamber overlap the chain chamber as seen in the direction along a cylinder axis, and adjacent to each other above the chain chamber, the first-cylinder and second-cylinder valve chambers having a first and a second valve chamber opening, respectively, which allow the respective valve chambers to access outside, and in which a first and a second valve chamber cover for opening and closing the respective valve chamber openings are integrally formed with each other.

Accordingly, the first-cylinder valve chamber and the second-cylinder valve chamber overlap the chain chamber, at least at their portions, and are adjacent to each other above the chain chamber. Thus, while the first and second cylinders are located on opposite sides of the chain chamber, the first-cylinder and second-cylinder valve chambers can adjoin each other, which allows the first and second valve chamber covers to be integrally formed. Therefore, only a single secondary air hose for introducing air to the first and second valve chambers is required, and the number of fastening bolts can be reduced, so that the structure is simplified.

It is preferable if the first and second valve chambers have a rectangular shape extending longer in the direction along the camshaft, and each reed valve in the first and second valve chambers includes a rectangular, thin plate and is located with its longer sides extending in the direction along the camshaft.

Accordingly, the first and second valve chambers have a rectangular shape extending longer in the direction along the camshaft. Each reed valve in the first and second valve chambers includes a rectangular, thin plate and is located with its longer sides extending in the direction along the camshaft. Thus, when the first and second cylinders are provided on opposite sides of the chain chamber, the first-cylinder and second-cylinder valve chambers can be located adjacent to each other without difficulty, and the capacity, area and space for the valve chambers and the reed valves can be obtained.

It is further preferable if the head cover has a breather chamber for separating oil mist from blow-by gas, the breather chamber at least at its portion overlapping the chain chamber as seen in the direction along the cylinder axis and being adjacent to the first-cylinder and second-cylinder valve chambers, and the breather chamber having a breather chamber opening which allows the breather chamber to access outside, and in which a breather chamber cover for opening and closing the breather chamber opening is integrally formed with the first-cylinder and second-cylinder valve chamber covers.

Thus, at least a portion of the breather chamber overlaps the chain chamber. Thus, when the first and second cylinders are located on opposite sides of the chain chamber, the capacity and space for the breather chamber can be obtained without difficulty.

Further, the breather chamber adjoins the first-cylinder and second-cylinder valve chambers. Thus, the breather chamber cover can be integrally formed with the first and second valve chamber covers. Therefore, the mating faces (seal faces) of the openings are flush with each other, so that the number of fastening bolts is reduced and the structure is simplified.

It is still further preferable if a secondary air hose and a breather hose are bundled together, the secondary air hose communicating an air cleaner connected to an intake passage in communication with a combustion chamber and the first-cylinder and second-cylinder valve chambers, and the breather hose communicating the air cleaner and the breather chamber.

Accordingly, the secondary air hose for communicating the air cleaner and the first-cylinder and second-cylinder valve chambers, and the breather hose for communicating the air cleaner and the breather chamber are bundled together. Thus, the routing structure of the hoses can be simplified, and hence the vicinity of the head covers can be simplified.

Therefore, the description above discloses as a preferred embodiment, in order to provide an engine capable of avoiding an increase in the number of parts and simplifying the sealing structure of secondary air introduction hoses and cover members, an engine comprising: a chain chamber "C" for accommodating a cam chain 12 for driving a camshaft 10 is formed between a first cylinder 2e and a second cylinder 2f aligned in the direction along the camshaft 10. A first-cylinder valve chamber 41 and a second-cylinder valve chamber 42 for each accommodating a reed valve 44 for supplying secondary air to an exhaust system overlap the chain chamber "C" and are adjacent to each other above the chain chamber "C." The first-cylinder and second-cylinder valve chambers 41, 42 have a first and a second valve chamber opening 41 a, 42, respectively. A first and a second valve chamber cover 46a, 46b for opening and closing the respective valve chamber openings are integrally formed with each other.

## Claims

1. Engine (1), in particular for motorcycles, having a secondary air supply system, for supplying secondary air to an exhaust system of the engine and having a chain chamber (C) centrally arranged between first and second cylinders (2e, 2f) of the engine (1), said secondary air supply system comprising first-cylinder and second cylinder valve chambers (41, 42), wherein at least portions of the valve chambers (41, 42) overlap the chain chamber (C) as seen in a direction along a cylinder axis.

2. Engine (1) according to claim 1, **characterized by** having a cylinder block (2), a cylinder head (4, 5) fastened on the cylinder block (2), and a head cover (6, 7) mounted to an opening of the cylinder head (4, 5), wherein the chain chamber (C) for accommodating a cam chain (12) for driving a camshaft (10) is formed between the first cylinder (2e) and the second cylinder (2f) aligned in the direction along the camshaft (10).

3. Engine (1) according to claim 1 or 2, **characterized in that** the first-cylinder valve chamber (41) and the second-cylinder valve chamber (42) are each accommodating a reed valve (44) for supplying secondary air to an exhaust system, and are adjacent to each other above the chain chamber (C).

4. Engine (1) according to one of the claims 1 to 3, **characterized in that** the first-cylinder and second-cylinder valve chambers (41, 42) are having a first and a second valve chamber opening (41 a, 42a), respectively, which allow the respective valve chambers (41, 42) to access outside, wherein a first and a second valve chamber cover (46) for opening and closing the respective valve chamber openings (41a, 42a) are integrally formed with each other.

5. Engine (1) according to one of the claims 1 to 4, **characterized in that** the first and second valve chambers (41, 42) have a rectangular shape extending longer in the direction along the camshaft (10), and each reed valve (44) in the first and second valve chambers (41, 42) includes a rectangular, thin plate and is located with its longer sides extending in the direction along the camshaft (10).

6. Engine (1) according to one of the claims 2 to 5, **characterized in that** the head cover (46) has a breather chamber (45) for separating oil mist from blow-by gas, the breather chamber (45) at least partially overlapping the chain chamber (C) as seen in the direction along the cylinder axis and being adjacent to the first-cylinder and second-cylinder valve chambers (41, 42), and the breather chamber (45) having a breather chamber opening (45a) which allows the breather chamber (45) to access outside.

7. Engine (1) according to claim 6, **characterized by** a breather chamber cover (46c) for opening and closing the breather chamber opening (45a) wherein the breather chamber cover (46c) is integrally formed with the first-cylinder and second-cylinder valve chamber covers (46).

8. Engine (1) according to one of the claims 1 to 7, **characterized by** a secondary air hose (47) and a breather hose (48), which are bundled together, the secondary air hose (47) communicating an air cleaner connected to an intake passage in communication with a combustion chamber and the first-cylinder and second-cylinder valve chambers (41, 42), and the breather hose (48) communicating the air cleaner and the breather chamber (45).
